# EUROPÄISCHE PATENTANMELDUNG

(11) **EP 1 923 844 A1**
(43) Veröffentlichungstag der Anmeldung: **21.05.2008**
(21) Anmeldenummer: 07021601.5
(22) Anmeldetag: 07.11.2007
(51) Int. Cl.: G07F 7/10, G07F 19/00, G06Q 20/00

(54) **Verfahren zur Interaktion eines Bankkunden mit einem Geldautomaten, zugehörige mobile Ein- und/oder Ausgabeeinrichtung sowie System zum Durchführen einer solchen Interaktion**

(30) Priorität: 18.11.2006 DE 102006054484
(71) Anmelder: Fiducia IT AG, 76227 Karlsruhe (DE)
(72) Erfinder: Schorer, Matthias, 81375 München (DE); Haseneder, Markus, 82319 Starnberg (DE)
(74) Vertreter: Bartels & Partner

(57) **Zusammenfassung**

Die Erfindung betrifft ein Verfahren zur Interaktion eines Bankkunden (2) mit einem Geldautomaten (4), bei dem anstelle der Anzeigeeinrichtung und der Tastatur eines herkömmlichen Geldautomaten (4) die Kommunikation mit dem Bankkunden (2) über eine mobile Ein- und/oder Ausgabeeinrichtung (6) erfolgt, vorzugsweise über das Mobiltelefon des Bankkunden (2). Die Erfindung betrifft auch eine zugehörige mobile Ein- und/oder Ausgabeeinrichtung (6) sowie ein System (1) zum Durchführen einer solchen Interaktion.

## Beschreibung

Die Erfindung betrifft ein Verfahren zur Interaktion eines Bankkunden mit einem Geldautomaten, eine zugehörige mobile Ein- und/oder Ausgabeeinrichtung sowie ein System zum Durchführen einer solchen Interaktion.

Heutige Geldautomaten haben ein Display und eine Tastatur für die Interaktion mit dem Bankkunden. Durch die Anforderung, dass das Display und die Tastatur sehr robust sind, insbesondere unempfindlich gegenüber Verschmutzung, Beschädigung durch Fremdkörper oder Eintritt von Feuchtigkeit oder Wasser, sind die Herstellungs- und Betriebskosten derartiger Geldautomaten erhöht. Außerdem ist es für eine Interaktion mit dem Geldautomaten erforderlich, die dem Bankkunden zugewiesene persönliche Identifikationsnummer (PIN) an der Tastatur des Geldautomaten einzugeben. Weil diese Eingabestelle damit vorgegeben ist, besteht für bösgläubige Dritte die Möglichkeit, die PIN auszuspionieren, beispielsweise durch gezieltes Beobachten oder durch Anbringen von Minikameras. Außerdem ist es für den Benutzer erforderlich, eine von der Bank ihm zugewiesene Karte, beispielsweise seine ec-Karte, in einen an dem Geldautomaten angebrachten Kartenschlitz einzustecken. Auch dadurch besteht für Dritte eine Manipulationsmöglichkeit, beispielsweise durch einen vorgebauten, falschen Kartenschlitz, mittels dem die Karte dem Bankkunden entwendet werden kann.

Der vorliegenden Erfindung liegt daher die Aufgabe zugrunde, ein Verfahren und eine zugehörige Einrichtung sowie ein zugehöriges System bereitzustellen, welche die Nachteile des Standes der Technik überwinden. Insbesondere soll ein Verfahren bereit gestellt werden, mit dem die Sicherheit der Interaktion erhöht ist und insbesondere eine Manipulationsmöglichkeit durch Dritte zuverlässig verhindert ist. Außerdem soll für den Bankkunden die Interaktion vereinfacht sein. In einer Ausführungsart soll die Interaktion mindestens teilweise nicht nur unmittelbar am Geldautomaten möglich sein, sondern in einer hiervon beabstandeten abgeschirmteren Privatsphäre.

Das Problem ist durch das im Anspruch 1 bestimmte Verfahren gelöst. Weiterhin ist das Problem durch die im nebengeordneten Anspruch bestimmte mobile Ein- und/oder Ausgabeeinrichtung, durch die Verwendung eines Mobiltelefons zur Interaktion, sowie durch ein System zum Durchführen einer Interaktion eines Bankkunden mit einem Geldautomaten. Besondere Ausführungsarten der Erfindung sind in den Unteransprüchen bestimmt.

In einer Ausführungsart der Erfindung werden zunächst Daten von einem dem Bankkunden zugeordneten mobilen Datenträger mittels einer Datenleseeinrichtung gelesen. In einer Ausführungsart erfolgt das Lesen der Daten berührungslos, beispielsweise über eine Funkwellenverbindung oder über eine lnfrarotverbindung. In einer Ausführungsart kann der mobile Datenträger von der Datenleseeinrichtung kontaktlos angesprochen werden und daraufhin die in ihm gespeicherten Daten an die Datenleseeinrichtung übertragen. Die Energie für den Betrieb des Datenträgers kann dabei von der Datenleseeinrichtung bereitgestellt werden, beispielsweise über ein elektromagnetisches Feld. In einer Ausführungsart moduliert der mobile Datenträger ein von den Datenleseeinrichtung ausgesandtes Feld entsprechend der in dem Datenträger gespeicherten Daten. In einer Ausführungsart können hierfür so genannte Radio Frequency Identification Devices (RFID) eingesetzt werden.

Bei den von der Datenleseeinrichtung gelesenen Daten kann es sich beispielsweise um einen vorzugsweise eindeutigen Code, beispielsweise eine fortlaufende Seriennummer des mobilen Datenträgers handeln. Alternativ oder ergänzend können diese Daten auch Informationen über die Bankverbindung des Benutzers enthalten, beispielsweise die sogenannte International Bank Account Number (IBAN) der Bank, welche den mobilen Datenträger ausgestellt hat, und weitere Daten, ähnlich denen auf einem Magnetstreifen oder einem Chip einer ec-Karte. In einer Ausführungsart ist die Kontonummer des Bankkunden nicht Bestandteil dieser Daten.

Der Vorteil eines solchen berührungslosen Auslesens der Daten von dem mobilen Datenträger besteht unter anderem darin, dass der Bankkunde hierzu den Datenträger nicht aus der Hand geben muss, insbesondere nicht wie bei einer ec-Karte in einen Kartenschlitz eingeführt werden muss, und mithin der Datenträger auch nicht unter Vorspiegelung falscher Tatsachen entwendet werden kann. In einer Ausführungsart muss der Datenträger innerhalb eines vorgebbaren Bereiches um die Datenleseeinrichtung herum angeordnet sein, damit die Daten ausgelesen werden können. Das Auslesen der Daten kann auch durch ein optisches, akustisches und/oder sonstiges Signal dem Bankkunden signalisiert werden. Außerdem kann das Lesen der Daten auch davon abhängig gemacht werden, dass der Bankkunde hierzu sein Einverständnis signalisiert, beispielsweise durch Drücken einer vorbestimmten Taste oder dergleichen.

Die gelesenen Daten werden von der Datenleseeinrichtung an eine Steuereinheit übertragen. Die Steuereinheit kann in Baueinheit mit der Datenleseeinrichtung ausgeführt sein, oder über eine drahtgebundene oder auch drahtlose Verbindung entfernt von der Datenleseeinrichtung angeordnet sein. Die Steuereinheit steht jedenfalls temporär mittelbar oder unmittelbar in Verbindung mit dem Geldautomaten. Die Steuereinheit kann in dem Gebäude angeordnet sein, in dem der Geldautomat aufgestellt ist. Alternativ hierzu können jedenfalls Teile der Steuereinheit auch an einem hiervon entfernten Ort angeordnet sein, beispielsweise in einem Rechenzentrum, zu dem der Geldautomat eine Datenverbindung aufbaut.

Die gelesenen Daten werden ausgewertet, insbesondere wird aus den gelesenen Daten eine Adresse identifiziert, unter der eine Eingabe und/oder Ausgabeeinrichtung erreichbar ist, über welche anschließend mit dem Bankkunden kommuniziert wird. Nach dem Stand der Technik erfolgt die Kommunikation über den Bildschirm und die Tastatur des Geldautomaten. In einer Ausführungsart der Erfindung erfolgt die Kommunikation über eine mobile Ein- und/oder Ausgabeeinrichtung, die dem Bankkunden zugeordnet ist, beispielsweise über das Mobiltelefon des Bankkunden. Die zugehörige Mobiltelefonnummer ist in der Steuereinheit hinterlegt bzw. abgespeichert und wird durch das Auswerten der gelesenen Daten ermittelt.

Der Bankkunde wird aufgefordert, eine Zeichenfolge für eine Prüfung der Berechtigung zur Durchführung eines Vorgangs mit dem Geldautomaten zu übermitteln. Bei der Zeichenfolge kann es sich um eine mehrfach verwendbare persönliche Identifikationsnummer (PIN) handeln, welche dem Bankkunden beispielsweise bei der Zuteilung des mobilen Datenträgers mitgeteilt wurde. Diese PIN kann dabei unterschiedlich sein gegenüber einer weiteren PIN, welche der Bankkunde im Zusammenhang beispielsweise mit seiner ec-Karte oder seiner Kreditkarte benutzt.

Alternativ oder ergänzend zur PIN kann die Zeichenfolge auch mittels eines zweiten mobilen Datenträgers übermittelt werden, beispielsweise mittels eines zweiten Datenträgers oder Transponders, den der Bankkunde etwa an einem Schlüsselbund mit sich führen kann. Dadurch ist gewährleistet, dass nur dann, wenn der Bankkunde sowohl im Besitz des mobilen Datenträgers ist als auch im Besitz eines zweiten Datenträgers ist, der Bankkunde auch berechtigt ist zur Durchführung eines Vorgangs mit dem Geldautomaten. Weiterhin alternativ oder ergänzend kann die Zeichenfolge auch biometrische Merkmale des Bankkunden repräsentieren, beispielsweise die zu einem Fingerabdruck, der Iris oder der Sprache des Bankkunden zugehörige charakteristische Zeichenfolge. Die zugehörigen Sensormittel können an der Ein- und/oder Ausgabeeinrichtung vorgesehen sein, etwa durch das Mikrofon oder die Kamera eines Mobiltelefons.

Die übermittelte Zeichenfolge wird anhand von gespeicherten Daten verifiziert. Beispielsweise erfolgt in der Steuereinheit oder in einem Rechenzentrum ein Vergleich einer eingegebenen PIN mit zugehörig gespeicherten Daten. Wird die übermittelte Zeichenfolge nicht als richtig erkannt, wird der Vorgang abgebrochen.

Im Falle einer positiven Verifikation wird eine Kommunikation mit dem Bankkunden über eine Ein- und/oder Ausgabeeinrichtung durchgeführt zur Ermittlung des mittels des Geldautomaten durchzuführenden Vorganges.

Diese Kommunikation kann zunächst beinhalten, dass der Bankkunde aufgefordert wird, eine Kontonummer einzugeben. Soweit als Ein- und/oder Ausgabeeinrichtung ein Mobiltelefon vorgesehen ist, kann er hierzu entweder die Tastatur des Mobiltelefons benutzen oder gegebenenfalls auch eine Spracheingabe, sofern das Mobiltelefon über eine Spracherkennung verfügt. Alternativ oder ergänzend wird mit dem Bankkunden kommuniziert, ob er beispielsweise eine Auszahlung wünscht, eine Information über den Kontostand, ein Ausdruck oder ein Zusenden von Kontoauszügen oder dergleichen. Die jeweiligen Eingaben macht der Bankkunde an der ihm zugeordneten Ein- und/oder Ausgabeeinrichtung, die mobil ist, so dass er einen gegebenenfalls auch begrenzten räumlichen Bewegungsspielraum hat, um die von ihm gemachten Eingaben in einer möglichst vertraulichen Atmosphäre vorzunehmen, beispielsweise nahe an seinem Körper und für Dritte uneinsehbar.

In einer Ausführungsart erfolgt die Kommunikation mit der ein- und/oder Ausgabeeinrichtung drahtlos, beispielsweise über eine Mobiltelefonverbindung. Es besteht auch die Möglichkeit, jedenfalls einen Teil der Kommunikation, beispielsweise auch die der eigentlichen Kommunikation vorgeschaltete Aufforderung an den Bankkunden zur Übermittlung einer Zeichenfolge für eine Prüfung der Berechtigung zur Durchführung eines Vorgangs mit dem Geldautomaten, auf eine andere Art und Weise als über eine Mobiltelefonverbindung durchzuführen, beispielsweise über eine Infrarotverbindung oder eine sogenannte "Blue Tooth" Verbindung, d.h. mittels Funkwellen. In einer Ausführungsart erfolgt allerdings mindestens eine Teil der Kommunikation über eine konventionelle Mobiltelefonverbindung, wobei es besonders vorteilhaft ist, dass der Aufbau einer solchen Verbindung von der Steuereinheit oder einem neben- oder übergeordneten Rechenzentrum aus initialisiert wird, und zwar unter Verwendung einer dem mobilen Datenträger zugeordneten Mobiltelefonnummer, die der Bankkunde beispielsweise im Rahmen seines Antrags auf Teilnahme an dem erfindungsgemäßen Verfahren angegeben hat.

In einer Ausführungsart wird bereits die Aufforderung an den Bankkunden zur Übermittlung der Zeichenfolge über die Ein- und/oder Ausgabeeinrichtung kommuniziert, insbesondere erfolgt bereits hierfür ein Anruf an dem dem Bankkunden zugeordneten Mobiltelefon.

In einer Ausführungsart wird vor der Durchführung des mittels des Geldautomaten durchzuführenden Vorgangs der Bankkunde erneut aufgefordert, die ihm zugeordneten Daten von dem mobilen Datenträger über die Datenleseeinrichtung einlesen zu lassen. Beispielsweise muss der Bankkunde hierfür den mobilen Datenträger wieder in räumliche Nähe zu der Datenleseeinrichtung bringen. Erst daraufhin erfolgt beispielsweise die Auszahlung des gewünschten Geldbetrages.

In einer Ausführungsart kann das Verfahren auch mindestens teilweise mit einem gewissen räumlichen Abstand zu dem Geldautomaten durchgeführt werden. Beispielsweise können das Lesen der Daten von dem mobilen Datenträger, die Aufforderung an den Bankkunden zur Übermittlung einer Zeichenfolge und/oder die Kommunikation mit dem Bankkunden zur Ermittlung des mittels des Geldautomaten durchzuführenden Vorgangs beabstandet von dem Geldautomaten durchgeführt werden, wodurch dieser lediglich für den reinen Auszahlungsvorgang genutzt wird, und dadurch bei jedem Vorgang nur für eine relativ kurze Zeit belegt ist. Wenn etwa ein Auszahlungsvorgang entsprechend vorbereitet ist, kann die Steuereinheit oder eine übergeordnete Rechenzentrale eine entsprechende Mitteilung an die Ein- und/oder Ausgabeeinrichtung des jeweiligen Bankkunden senden, beispielsweise eine Kurzmitteilung über die Mobiltelefonverbindung, gegebenenfalls auch einschließlich der Angabe, an welchem von möglicherweise mehreren vorhandenen Geldautomaten er seinen Geldbetrag erhalten wird. Daraufhin begibt sich der Bankkunde an den jeweiligen Geldautomaten und veranlasst den Auszahlungsvorgang beispielsweise dadurch, dass er seinen mobilen Datenträger in die Nähe der zugehörigen Datenleseeinrichtung bringt, so dass der Geldautomat oder die zugehörige Steuereinheit feststellen kann, dass der Bankkunde nun zur Entgegennahme des auszuzahlenden Betrages bereit steht.

Die vorliegende Erfindung umfasst auch eine mobile Ein- und/oder Ausgabeeinrichtung zur Durchführung eines solchen Verfahrens, wobei die Ein- und/oder Ausgabeeinrichtung eine erste Schnittstelle mit einem Schnittstellenbaustein zur Datenübertragung mit einer Steuereinheit eines Geldautomaten aufweist. In einer Ausführungsart umfasst die Schnittstelle einen Datenträger, in dem Daten gespeichert sind, die von einer einem Geldautomaten zugeordneten Leseeinrichtung vorzugsweise drahtlos auslesbar sind. Der Datenträger kann in Baueinheit mit der mobilen Ein- und/oder Ausgabeeinheit ausgeführt sein oder auch lösbar mit dieser verbunden sein. Der mobile Datenträger kann auf die Innenseite eines Batteriefachdeckels der mobilen Ein- und/oder Ausgabeeinrichtung aufgebracht sein, beispielsweise selbstklebend festgelegt sein. Dies ist vorteilhaft, wenn es sich bei dem mobilen Datenträger um einen RFID-Chip handelt, der in flacher Bauform vorliegt und mittels einer selbstklebenden Folie an der mobilen Ein- und/oder Ausgabeeinrichtung festgemacht werden kann.

In einer Ausführungsart handelt es sich bei der mobilen Ein- und/oder Ausgabeeinrichtung um einen Bestandteil eines Mobiltelefons, welches darüber hinaus noch eine zweite Schnittstelle zum Datenaustausch über eine Mobiltelefonverbindung aufweist. Diese zweite Schnittstelle wird insbesondere für die Kommunikation mit dem Bankkunden zur Ermittlung des mittels des Geldautomaten durchzuführenden Vorgangs eingesetzt.

Mithin betrifft die vorliegende Erfindung auch die Verwendung eines Mobiltelefons zur Datenübertragung mit einer Steuereinheit eines Geldautomaten, wobei die Ein- und/oder Ausgabe mittels des Mobiltelefons, insbesondere der Tastatur und des Displays, zur Ermittlung eines von einem Bankkunden gewünschten und mittels des Geldautomaten durchzuführenden Vorgangs eingesetzt werden. Auf diese Weise kann an den Geldautomaten auf eine Tastatur und/oder ein Display verzichtet werden, wodurch diese den Charakter eines Geldkassentresors bekommen und auf einfache und kostengünstige Weise gegen Vandalismus geschützt werden können. Die Ein- und/oder Ausgabeeinrichtung kann auch einen oder mehrere Sensoren zur Erfassung biometrischer Merkmale des Bankkunden aufweisen, beispielsweise einem Fingerabdrucksensor, ein Mikrofon und/oder eine Fotokamera.

Die Erfindung betrifft auch ein System zum Durchführen einer Interaktion eines Bankkunden mit einem Geldautomaten, wobei ein solches System eine Datenleseeinrichtung zum Lesen von Daten von einem dem Bankkunden zugeordneten mobilen Datenträger aufweist, die beispielsweise in unmittelbarer Nähe des Geldautomaten oder sogar in Baueinheit mit dem Geldautomaten ausgeführt sein kann. Eine Steuereinheit, mit welcher die gelesenen Daten auswertbar sind, kann ebenfalls nahe am Ort des Geldautomaten angeordnet sein oder sogar in Baueinheit mit diesem ausgeführt sein. Alternativ oder auch ergänzend können jedenfalls Teile einer solchen Steuereinheit auch entfernt von dem Geldautomaten angeordnet sein, beispielsweise in einem Rechenzentrum, das für die Bank zuständig ist, die den Geldautomaten betreibt.

Die für das Durchführen der Interaktion vorgesehene mobile Ein- und/oder Ausgabeeinrichtung ist dem Bankkunden zugeordnet, insbesondere kann es sich dabei um ein Mobiltelefon handeln, dass der Bankkunde bereits besitzt und dessen Telefonnummer er beim Antrag zur Teilnahme an dem erfindungsgemäßen Verfahren angibt.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

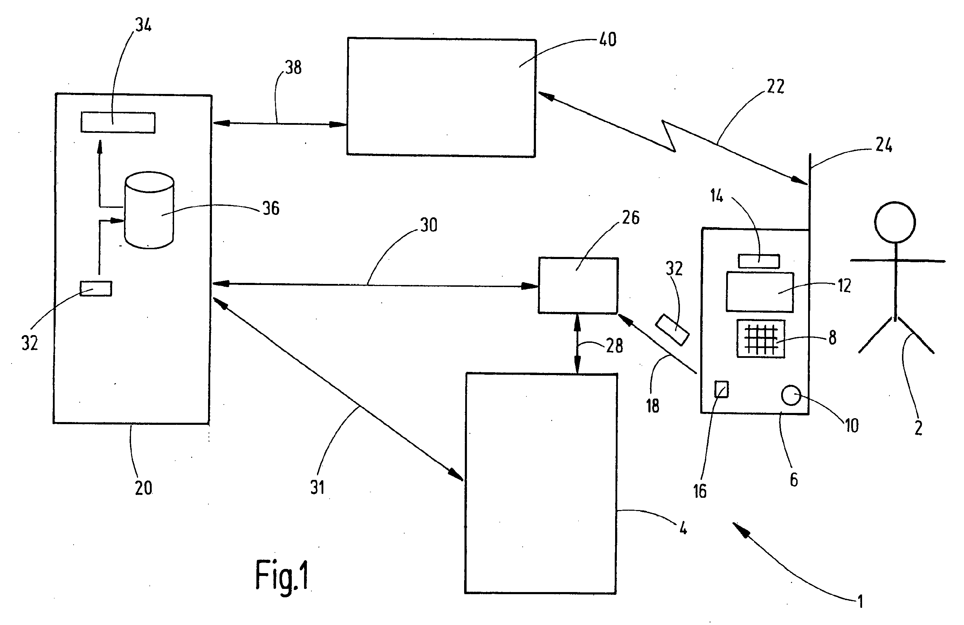

- Fig. 1: zeigt ein Blockschaltbild eines erfindungsgemäßen System.

Die Fig. 1 zeigt ein Blockschaltbild eines erfindungsgemäßen System (1) zum Durchführen einer Interaktion eines Bankkunden 2 mit einem Geldautomaten 4. Der Bankkunde 2 ist im Besitz einer ihm zugeordneten Ein- und/oder Ausgabeeinrichtung 6, im dargestellten Ausführungsbeispiel seines Mobiltelefons. Die Ein- und/oder Ausgabeeinrichtung 6 weist als Eingabemittel eine Tastatur 8 und ein Mikrofon 10 auf und als Ausgabemittel ein Display 12 sowie einen Lautsprecher 14. Alternativ oder ergänzend kann die Ein- und/oder Ausgabeeinrichtung 6 Sensormittel zum Erfassen biometrischer Merkmale aufweisen, beispielsweise eine Fotokamera zur Erfassung der Iris oder einen Sensor zum Erfassen des Fingerabdrucks. Das Mikrofon 10 kann zum Erfassen der Sprechmerkmale des Bankkunden 2 verwendet werden.

An der Ein- und/oder Ausgabeeinrichtung 6, und vorzugsweise fest mit dieser verbunden, ist ein Datenträger 16 angeordnet, der ebenso wie die Ein- und/oder Ausgabeeinrichtung 6 mobil ist, insbesondere portabel. Der Datenträger 16 ist ein Schnittstellenbaustein einer ersten Schnittstelle der Ein- und/oder Ausgabeeinrichtung 6 zur Übertragung 18 von Daten an eine Datenleseeinrichtung 26 und weiter an eine Steuereinheit 20 des Geldautomaten 4. Darüber hinaus weist die Ein- und/oder Ausgabeeinrichtung 6 eine zweite Schnittstelle zum Datenaustausch über eine Mobiltelefonverbindung 22 auf, wobei die zweite Schnittstelle im Ausführungsbeispiel eine Antenne 24 für das Senden und Empfangen von Funkwellen umfasst. Alternativ oder ergänzend kann die Ein- und/oder Ausgabeeinrichtung 6 weitere Schnittstellen für eine Datenübertragung mit dem Geldautomaten 4, der Steuereinheit 20 oder weiteren Komponenten des Systems 1 aufweisen, beispielsweise eine Infrarotschnittstelle oder eine Blue Tooth Schnittstelle.

Im dargestellten Ausführungsbeispiel ist der Datenträger 16 ein Radio Frequency Identifikation Device (RFID)-Chip. Bei ausreichender Annäherung der Ein- und/oder Ausgabeeinrichtung 6 an die Datenleseeinrichtung 26 wird der in dem Datenträger 16 gespeicherte Dateninhalt mindestens teilweise übertragen. Der Inhalt des Datenträgers 18 ist beispielsweise ein eindeutiger Code 32, etwa eine Seriennummer des RFID-Chips, die IBAN der Bank, welche den RFID-Chip ausgestellt hat und/oder weitere Daten, ähnlich denen auf dem Magnetstreifen einer ec-Karte des Bankkunden. In einer Ausführungsart erfolgt die Übertragung 18 von Daten nur in einer Richtung, nämlich von dem Datenträger 16 zu der Datenleseeinrichtung 26. Ergänzend hierzu könnte der Datenträger 16 auch beschreibbar sein, und die Datenleseeinrichtung 26 könnte auch eine Datenschreibeinrichtung sein, mittels der Daten auf den Datenträger 16 geschrieben werden, beispielsweise Protokolldaten oder neue Identifikationsdaten, die beim nächsten Vorgang abgefragt werden und für welche die Steuereinheit 20 eine entsprechende Erwartungshaltung hat.

Die Datenleseeinrichtung 26 kann dabei integraler Bestandteil des Geldautomaten 4 sein, oder auf diesen aufgesetzt sein, oder von diesem beabstandet angeordnet sein. Die Datenleseeinrichtung 26 kann mit dem Geldautomaten 4 über eine Signal- und/oder Energieleitungsverbindung 28 verbunden sein. Nach dem Lesen der Daten von dem Datenträger 16 baut die Datenleseeinrichtung 26 unmittelbar über einen Verbindungskanal 30 oder mittelbar über den Geldautomat 4 einen Verbindungskanal 31 mit der Steuereinheit 20 auf, im dargestellten Ausführungsbeispiel mit einem Rechenzentrum.

In der Steuereinheit 20 werden die aus dem Datenträger 16 ausgelesenen Daten ausgewertet, beispielsweise wird zunächst geprüft, ob die ausgelesenen Daten plausibel sind oder ob eine Manipulation oder Übertragungsstörung vorliegt, und/oder es wird geprüft, ob die ausgelesenen Daten zu einer Interaktion des Bankkunden 2 mit dem Geldautomaten 4 berechtigen. Die ausgelesenen Daten werden daraufhin überprüft, ob hierzu eine Adresse 34 der Ein- und/oder Ausgabeeinrichtung 6 hinterlegt ist. Im Ausführungsbeispiel erfolgt die Ermittlung durch Vergleich des ausgelesenen eindeutigen Codes 32 mit auf einem Datenspeicher 36 in der Steuereinheit 20 gespeicherten Daten.

Gegebenenfalls baut die Steuereinheit 20 über eine Verbindung 38 und ein Kommunikationsnetz 40 die Verbindung 22 zu der Ein- und/oder Ausgabeeinrichtung 6 auf. Bei dem Kommunikationsnetzwerk 40 handelt es sich im Ausführungsbeispiel um ein Mobiltelefonnetz und die Verbindung 22 ist eine Mobiltelefonverbindung, möglicherweise auch eine komibnierte Sprache- und Datenverbindung. Im Ausführungsbeispiel ruft die Steuereinheit 20 das Mobiltelefon des Bankkunden 2 an und der Bankkunde 2 nimmt das Gespräch entgegen. Er kann nun von einer Sprachansage aufgefordert werden, eine persönliche Identifikationsnummer (PIN) über die Tastatur 8 einzugeben. Diese PIN wurde dem Bankkunden 2 bei der Ausgabe des Datenträgers 16 mitgeteilt und ist im Ausführungsbeispiel insbesondere nicht identisch mit der PIN der ec-Karte des Bankkunden 2. Die Eingabe der PIN wird überprüft und im Falle einer für falsch erachteten eingegebenen PIN wird der Vorgang abgebrochen. War die Eingabe der PIN dagegen korrekt, erfolgt eine Fortsetzung der Kommunikation mit dem Bankkunden 2 zur Ermittlung des mittels des Geldautomaten 4 durchzuführenden Vorgangs. Beispielsweise wird über eine Sprachansage der Bankkunde 2 nach der Kontonummer jenes Kontos gefragt, bezüglich dessen der Vorgang abgewickelt werden soll. Der Bankkunde 2 gibt diese Kontonummer ebenfalls über die Tastatur 8 ein.

Die eingegebene Kontonummer wird von der Steuereinheit 20 überprüft. Ist die Kontonummer nicht korrekt, wird der Bankkunde 2 aufgefordert, die Kontonummer erneut einzugeben. Nach einer vorgegebenen Anzahl von Fehlversuchen wird der Vorgang abgebrochen. Darüber hinaus kann auch der Datenträger 16 durch einen entsprechenden Eintrag beispielsweise in den Datenspeicher 36 der Steuereinheit 20 gesperrt werden. Eine Entsperrung kann nur durch die Bank erfolgen.

Bei Eingabe einer korrekten Kontonummer werden dem Bankkunden 2 über eine Sprachansage mehrere Optionen betreffend den mittels des Geldautomaten 4 durchzuführenden Vorgangs angeboten. Der Bankkunde 2 kann beispielsweise durch Betätigen der Tastatur 8 eine oder mehrere dieser Optionen auswählen, etwa den Kontostand abfragen, der ihm über die Sprachansage dann mitgeteilt wird, eine Kontostandsabfrage per Kurzmitteilung (SMS) anfordern, eine Auszahlung anfordern, den Vorgang abbrechen oder die Ansage der zur Verfügung stehenden Optionen wiederholen lassen.

Wählt der Bankkunde 2 beispielsweise die Option Auszahlung aus, wird er über die Sprachansage aufgefordert, den gewünschten Auszahlungsbetrag über die Tastatur 8 einzugeben. In der Steuereinheit wird überprüft, ob der gewünschte Betrag verfügbar ist. Sollte dies nicht der Fall sein, wird dem Bankkunden 2 über die Sprachansage der maximal verfügbare Betrag mitgeteilt und der Bankkunde 2 kann dann erneut einen Betrag eingeben.

Ergibt die Überprüfung, dass der gewünschte Betrag auszahlbar ist, wird der Bankkunde 2 aufgefordert, erneut die Ein- und/oder Ausgabeeinrichtung 6 in die Nähe der Datenleseeinrichtung 26 zu bringen und es werden noch einmal Daten von dem mobilen Datenträger 16 gelesen und an die Steuereinheit 20 übertragen. In der Steuereinheit 20 wird überprüft, ob diese erneut gelesenen Daten identisch sind mit jenen Daten, welche den anhängigen Vorgang ursprünglich initiiert haben. Wenn dies der Fall ist, wird der gewünschte Betrag an dem Geldautomaten 4 ausbezahlt. Sollte dies nicht der Fall sein, oder wird die Ein- und/oder Ausgabeeinrichtung 6 nicht innerhalb einer vorgebbaren Zeitdauer in den Lesebereich der Datenleseeinrichtung 26 gebracht, wird der Vorgang abgebrochen.

Nach erfolgter Auszahlung wird dem Bankkunden 2 die Auszahlung bestätigt, beispielsweise durch eine SMS auf die mobile Ein- und/oder Ausgabeeinrichtung 6 oder - alternativ oder ergänzend - auf andere Weise, beispielsweise durch eine E-Mail an eine diesbezüglich zuvor von dem Bankkunden 2 festgelegte E-Mail-Adresse. Diese Bestätigung enthält neben einer Identifizierung der Bank, beispielsweise der IBAN, die ersten vier Stellen der Kontonummer, das Datum und die Uhrzeit der Auszahlung sowie die Höhe des ausbezahlten Betrages.

Im dargestellten Ausführungsbeispiel muss die mobile Ein- und/oder Ausgabeeinrichtung 6 benachbart zu der Datenleseeinrichtung 26 sein, damit die Datenübertragung 18 möglich ist. Das Auslesen des Codes 32 kann automatisch erfolgen, sobald die Ein- und/oder Ausgabeeinrichtung 6 ausreichend nahe an der Datenleseeinrichtung 26 ist, oder das Auslesen muss durch eine Aktion des Bankkunden 2, beispielsweise durch Betätigen einer Taste, veranlasst werden. Hierzu kann dem Bankkunden 2 zunächst signalisiert werden, dass er sich nun im Lesebereich der Datenleseeinrichtung 26 befindet, beispielsweise durch ein akustisches oder optisches Signals an der Ein- und/oder Ausgabeeinrichtung 6.

Weiterhin ist im dargestellten Ausführungsbeispiel die Datenleseeinrichtung 26 entweder in Baueinheit mit dem Geldautomaten 4 ausgeführt oder jedenfalls in räumlicher Nähe zu diesem angeordnet. Dagegen besteht in der Regel eine größere Entfernung zwischen dem Geldautomaten 4 und der Steuereinheit 20, wobei allerdings abweichend vom dargestellten Ausführungsbeispiele Teile der Steuereinheit 20 in räumlicher Nähe zu dem Geldautomaten 4 und insbesondere der Datenleseeinrichtung 26 angeordnet sein können, insbesondere auch in Baueinheit mit dieser ausgebildet sein können. So kann beispielsweise eine erste Prüfung, ob die von dem Datenträger 16 gelesenen Daten plausibel sind, bereits in der Datenleseeinrichtung 26 oder dem Geldautomaten 4 erfolgen.

Die vorstehend beschriebenen Sprachansagen können von einem zentralen Sprachausgabesystem bereitgestellt werden, mittels dem gleichzeitig Tasteneingaben an der Ein- und/oder Ausgabeeinrichtung 6 anhand des Mehrfrequenzwahlverfahrens ausgewertet werden können. Dieses System kann unmittelbar mit der Steuereinheit 20 verbunden sein oder in die Datenverbindung 38 zwischen der Steuereinheit 20 und dem Kommunikationsnetz 40 zwischengeschaltet sein.

Alternativ oder ergänzend zu den Sprachansagen kann auch eine grafische Anzeige der dem Bankkunden 2 offenstehenden Optionen für die mit dem Geldautomaten durchzuführenden Vorgänge auf dem Display 12 der Ein- und/oder Ausgabeeinrichtung 6 angezeigt werden.

Der Datenträger 16 wird im Ausführungsbeispiel von der kontoführenden Bank dem Bankkunden 2 ausgehändigt oder zugesendet. Der Datenträger 16 kann selbstklebend an der Ein- und/oder Ausgabeeinrichtung 6 festgelegt werden, beispielsweise auf der Innenseite eines Batteriefachdeckels. Die zu dem Datenträger 16 zugeordnete PIN wird dem Bankkunden 2 mit getrennter Briefpost zugesendet.

Zusammengefasst ist das Verfahren zur Interaktion des Bankkunden 2 mit dem Geldautomaten 4 wie folgt zu beschreiben:

Der Bankkunde 2 geht mit der Ein- und/oder Ausgabeeinrichtung 6, beispielsweise mit seinem Mobiltelefon, die gegebenenfalls auch erst nachträglich mit einem Datenträger 16 ausgestattet ist, beispielsweise einem RFID-Chip, an einen Geldautomaten 4, der eine Datenleseeinrichtung 26 aufweist, insbesondere eine Datenleseeinrichtung 26, die drahtlos den Inhalt des Datenträgers 16 auslesen kann. Der Bankkunde 2 hält die Ein- und/oder Ausgabeeinrichtung 6 an die Datenleseeinrichtung 26. Nach erfolgter Identifizierung durch die Steuereinheit 20 wird das Mobiltelefon zurückgerufen und der Bankkunde 2 gibt die PIN ein und wird anschließend aufgefordert, die Kontonummer einzugeben. Anschließend gibt der Bankkunde 2, beispielsweise von einem Sprachmenü geführt, den gewünschten Auszahlungsbetrag per Tastatur 8 ein und wird danach aufgefordert, sein Mobiltelefon erneut an den Geldautomaten 4 zu halten, insbesondere in den Lesebereich der Datenleseeinrichtung 26, um die vorbereitete Transaktion zu bestätigen. Danach wird der Betrag vom Geldautomaten 4 ausbezahlt und die Transaktion ist abgeschlossen. In entsprechender Weise kann auch der Kontostand abgefragt werden oder andere Vorgänge durchgeführt werden.

Die Erfindung betrifft mithin ein Verfahren zur Interaktion eines Bankkunden (2) mit einem Geldautomaten (4), bei dem anstelle der Anzeigeeinrichtung und der Tastatur eines herkömmlichen Geldautomaten (4) die Kommunikation mit dem Bankkunden (2) über eine mobile Ein- und/oder Ausgabeeinrichtung (6) erfolgt, vorzugsweise über das Mobiltelefon des Bankkunden (2).

## Patentansprüche

1. Verfahren zur Interaktion eines Bankkunden (2) mit einem Geldautomaten (4) mit den Schritten:
• Lesen von Daten von einem dem Bankkunden (2) zugeordneten mobilen Datenträger (16) mittels einer Datenleseeinrichtung (26),
• Übertragen der gelesenen Daten von der Datenleseeinrichtung (26) an eine mit dem Geldautomaten (4) mittelbar oder unmittelbar in Verbindung stehende Steuereinheit (20),
• Auswerten der gelesenen Daten in der Steuereinheit (20),
• Aufforderung an den Bankkunden (2) zur Übermittlung einer Zeichenfolge für eine Prüfung der Berechtigung zur Durchführung eines Vorgangs mit dem Geldautomaten (4),
• automatisches Verifizieren der übermittelten Zeichenfolge anhand von gespeicherten Daten,
• Kommunikation mit dem Bankkunden (2) über eine Ein- und/oder Ausgabeeinrichtung (6) zur Ermittlung des mittels des Geldautomaten (4) durchzuführenden Vorgangs,
**dadurch gekennzeichnet,**
• **dass** die Ein- und/oder Ausgabeeinrichtung (6) mobil ist,
• und **dass** die Ein- und/oder Ausgabeeinrichtung (6) dem Bankkunden (2) zugeordnet ist.

2. Verfahren nach Anspruch 1, **dadurch gekennzeichnet, dass** die Kommunikation mit der Ein- und/oder Ausgabeeinrichtung (6) drahtlos erfolgt.

3. Verfahren nach Anspruch 1 oder 2, **dadurch gekennzeichnet, dass** die Kommunikation mit der Ein- und/oder Ausgabeeinrichtung (6) über eine Mobiltelefonverbindung (22) erfolgt, insbesondere dass die Ein- und/oder Ausgabeeinrichtung (6) Bestandteil eines Mobiltelefons ist.

4. Verfahren nach einem der vorangehenden Ansprüche, **dadurch gekennzeichnet, dass** die Aufforderung an den Bankkunden (2) zur Übermittlung der Zeichenfolge über die Ein- und/oder Ausgabeeinrichtung (6) kommuniziert wird.

5. Verfahren nach einem der vorangehenden Ansprüche, **dadurch gekennzeichnet, dass** die Leseeinheit (26) den mobilen Datenträger (16) berührungslos ausliest.

6. Verfahren nach einem der vorangehenden Ansprüche, **dadurch gekennzeichnet, dass** aus den von dem mobilen Datenträger (16) gelesenen Daten eine Adresse der Ein- und/oder Ausgabeeinrichtung (6) ermittelt wird.

7. Verfahren nach einem der vorangehenden Ansprüche, **dadurch gekennzeichnet, dass** vor der Durchführung des mittels des Geldautomaten (4) durchzuführenden Vorgangs der Bankkunde (2) erneut aufgefordert wird, die ihm zugeordneten Daten von dem mobilen Datenträger (16) über die Datenleseeinrichtung (26) einlesen zu lassen.

8. Mobile Ein- und/oder Ausgabeeinrichtung (6) mit Ein- und/oder Ausgabemitteln zur Eingabe von Daten durch einen Bankkunden (2) und/oder zur Ausgabe von Daten an einen Bankkunden (2) zur Interaktion des Bankkunden (2) mit dem Geldautomaten (4), insbesondere zur Durchführung eines Verfahrens nach einem der Ansprüche 1 bis 7, **dadurch gekennzeichnet, dass** die Ein- und/oder Ausgabeeinrichtung (6) einem Bankkunden (2) zugeordnet ist, und dass die Ein- und/oder Ausgabeeinrichtung (6) eine Schnittstelle mit einem Schnittstellenbaustein zur Datenübertragung mit einer Steuereinheit (20) eines Geldautomaten (4) aufweist.

9. Mobile Ein- und/oder Ausgabeeinrichtung (6) nach Anspruch 8, **dadurch gekennzeichnet, dass** die Schnittstelle einen Datenträger (16) umfasst, in dem Daten gespeichert sind, die von einer einem Geldautomaten (4) zugeordneten Leseeinrichtung (26) vorzugsweise drahtlos auslesbar sind.

10. Mobile Ein- und/oder Ausgabeeinrichtung (6) nach Anspruch 8 oder 9, **dadurch gekennzeichnet, dass** die Ein- und/oder Ausgabeeinrichtung (6) eine weitere Schnittstelle zum Datenaustausch über eine Mobiltelefonverbindung (22) aufweist, insbesondere dass die Ein- und/oder Ausgabeeinrichtung (6) Bestandteil eines Mobiltelefons ist.

11. Verwendung eines Mobiltelefons zur Datenübertragung mit einer Steuereinheit (20) eines Geldautomaten (4), wobei Ein- und/oder Ausgabemittel des Mobiltelefons zur Ermittlung eines von einem Bankkunden (2) gewünschten und mittels des Geldautomaten (4) durchzuführenden Vorgangs eingesetzt werden.

12. System (1) zum Durchführen einer Interaktion eines Bankkunden (2) mit einem Geldautomaten (4), wobei das System (1) aufweist:
• eine Datenleseeinrichtung (26) zum Lesen von Daten von einem dem Bankkunden (2) zugeordneten mobilen Datenträger (16),
• eine mit dem Geldautomaten (4) mittelbar oder unmittelbar in Verbindung stehende Steuereinheit (20), an welche die gelesenen Daten übertragbar sind und dort auswertbar sind,
• eine Einheit zum automatischen Verifizieren einer nach einer entsprechenden Aufforderung von dem Bankkunden (2) übermittelten Zeichenfolge anhand von gespeicherten Daten für eine Prüfung der Berechtigung zur Durchführung eines Vorgangs mit dem Geldautomaten (4),
• eine Ein- und/oder Ausgabeeinrichtung (6) zur Ermittlung des mittels des Geldautomaten (4) durchzuführenden Vorgangs,
**dadurch gekennzeichnet,**
• **dass** die Ein- und/oder Ausgabeeinrichtung (6) mobil ist,
• und **dass** die Ein- und/oder Ausgabeeinrichtung (6) dem Bankkunden (2) zugeordnet ist.
